# EUROPEAN PATENT SPECIFICATION

(11) **EP 3 034 204 B1**
(45) Date of publication and mention of the grant of the patent: **13.06.2018**
(21) Application number: 14892877.3
(22) Date of filing: 19.11.2014
(51) Int. Cl.: B22F 3/115, B29C 64/106, B33Y 10/00, B22F 3/105

(54) **OPTIMIZED 3D PRINTING METHOD**
OPTIMIERTES VERFAHREN FÜR 3D-DRUCKEN
PROCÉDÉ D'IMPRESSION 3D OPTIMISÉ

(30) Priority: 24.09.2014 CN 201410495935
(43) Date of publication of application: 22.06.2016
(73) Proprietor: Beijing Tiertime Technology Co. Ltd., Beijing 101407 (CN)
(72) Inventor: GUO, Ge, Beijing 101407 (CN)
(74) Representative: Delorme, Nicolas
(86) International application number: PCT/CN2014/001035
(87) International publication number: WO 2016/044963

(56) References cited:
- CN-A- 103 722 744
- CN-A- 103 722 744
- CN-U- 203 792 720
- FR-A1- 2 997 964
- JP-A- 2010 100 883

## Description

### FIELD OF THE INVENTION

The present invention relates to a three-dimensional printing method, which pertains to the optimized method of three-dimensional printing.

### BACKGROUND

Three-dimensional printing, a kind of rapid prototyping, is the technology that prints object layer by layer through using adhesive materials of powdered metal or plastic base on the file of digital model. In the working procedures, the three-dimensional printer prints the model by spraying melt material through a nozzle to carry out the layered accumulation on the work platform. The material accumulates and adheres on the surface of the work platform. And the weak adhesion leads to the warping phenomenon which makes the model apart from the upper surface of the work platform in subsequent printing.

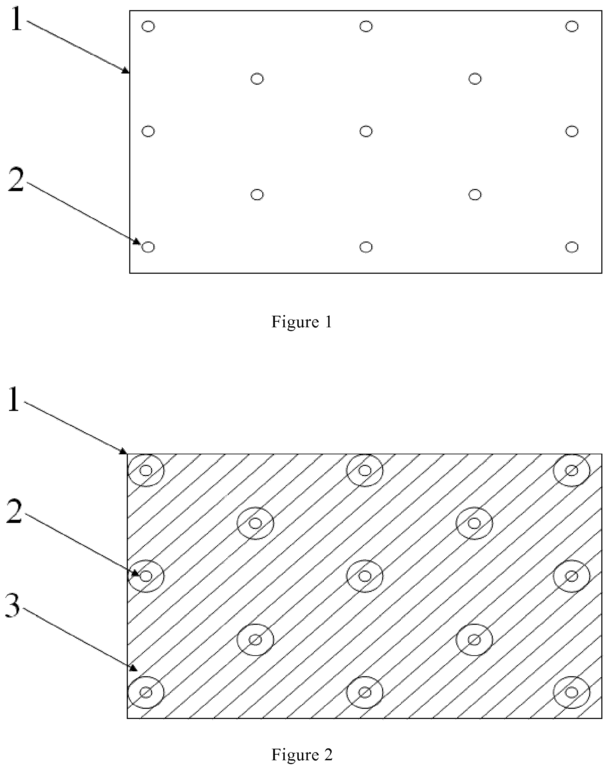

Currently, in order to ensure that the bottom of the model can be well adhered with the upper surface of the work platform, a extremely flat upper surface of the work platform is usually needed in the existing print mode. Otherwise, the concaves or convexes on the surface not only become the nodes of warping of the model but also damage the nozzle due to the pressing. In order to meet this point, the design of the work platform is very limited. However, as shown in Figure 1, due to the demand of the printer, many intelligent control structures must be set on the work platform. After the setting of the intelligent control structures, the shape of the surface of the work platform will be different. The surface of the work platform will be left with the installation location hole to correct the reference points and concave-convex points.

As shown in Figure 2, the friction and collision between the nozzle and the concave-convex points in the existing print mode can easy lead to warp that the circle place is not bonded firmly Patent CN103722744 discloses a method of three-dimensional printing that generates the data of the printing of the bottom layer depending on the concave-convex points present on the work platform Therefore, how to lower the requirements of the work platform, reduce the damage to the nozzle and eliminate the phenomenon of warping at the bottom become the targets to those skilled in the art.

### SUMMARY OF THE INVENTION

To achieve that lowering the requirements of the work platform, reducing the damage to the nozzle and eliminating the phenomenon of warping at the bottom in the process of three-dimensional printing, the invention novelly raises an optimized method of three-dimensional printing.

To achieve the above objectives, the technical scheme which is adopted by the invention is an optimized method of three-dimensional printing, the method comprising:
A) generate three-dimensional CAD model;
B) separate the three-dimensional CAD model into a series of layers;
C) print the separate layers by the method that spray the given composite material through a nozzle;
D) the bottom layer (3) is printed through the nozzle on the work platform;
E) the layers except the bottom layer are printed after finish the printing of the bottom layer (3) to form the three-dimensional composite model;
characterized that the method generates the data of the printing of bottom layer (3) depending on the concave-convex points (2) on the work platform (1) in procedure B).

Existing three-dimensional printing technology requires the pre-designed model to determine the print path in the software model analysis and hierarchical processing such that a high quality work platform is needed to print the bottom layer. Compare to the existing technology, the invention innovates the analysis of the degree of concave-convex of the work platform to generate the corresponding data of printing before the bottom layer is printed. The path of printing bottom layer can be changed, thereby lowering the requirements of the work platform, reducing the damage to the nozzle and eliminating the phenomenon of warping at the bottom.

In addition, the path of printing bottom layer will detour concave-convex points on the work platform by the data of printing bottom layer such that the shape of the printing path varies according to the different work platform.

The nozzle will detour the concave-convex points on the work platform when the nozzle is close to the concave-convex points in printing to avoid touching between the nozzle and concave-convex points according to the data of printing bottom layer. Thus not only the nozzle will not be damaged by concave-convex points but also the extremely flat surface of the work platform is not necessary such that the phenomenon of warping at the bottom part cannot be occurred.

Furthermore, the nozzle moves to left or right and deviates the concave-convex points when the nozzle is near to the concave-convex points on the work platform, and then continues to print. Moreover, the nozzle moves up and over the concave-convex points when the nozzle is near to the concave-convex points on the work platform, and then continues to print. Besides, the nozzle prints around the concave-convex points as a center when the nozzle near to the concave-convex points on the work platform.

What's more, printing the second print layer to cover the concave-convex points which were detoured in the printing of the bottom layer to form a complete plane after finish the printing of the bottom layer, and then complete the printing of the subsequent print layer on that plane.

Due to the specific path of printing bottom layer which is designed base on the surface of the work platform, the printing of bottom layer detours the concave-convex points on the work platform. After the finish of printing bottom layer, the second print layer covers the concave-convex points such that makes the bottom layer be printed densely. Then use the conventional printing method to print the second print layer and the subsequent print layer.

The beneficial effect of the invention is that compare to the existing three-dimensional technology, the invention innovates the analysis of the degree of concave-convex of the work platform to generate the corresponding data of printing, thereby lowering the requirements of the work platform, reducing the damage to the nozzle and eliminating the phenomenon of warping at the bottom.

### BRIEF DESCRIPTION OF THE DRAWINGS

FIG. 1 shows the main view of the work platform with concave-convex points;
FIG. 2 shows the main view of the existing print method that printing bottom layer on the work platform;
FIG. 3 shows the main view that the bottom layer is printed on the work platform by detouring the concave-convex points;
FIG. 4 shows the main view that the bottom layer is printed on the work platform by skipping the concave-convex points;
FIG. 5 shows the main view that the bottom layer is printed on the work platform by circling around the concave-convex points;
FIG. 6 shows that the stereoscopic model is printed layer by layer on the work platform by moving around the concave-convex points;

In the figures,
1. Work platform; 2. Concave-convex points; 3. Bottom layer; 4. The second print layer; 5. The subsequent print layer.

### DETAILED DESCRIPTION

Following is the detailed description of the preferred embodiment of the invention with drawings.

As shown in figure 1-6, for a work platform 1 with concave-convex points 2, the invention relates to an optimized method of three-dimensional printing, the method comprising:
A) generate three-dimensional CAD model;
B) separate the three-dimensional CAD model into a series of layers;
C) print the separate layers by the method that spray the given composite material through a nozzle;
D) the bottom layer 3 is printed through the nozzle on the work platform;
E) the layers except the bottom layer are printed after finish the printing of the bottom layer 3 to form the three-dimensional composite model;

The method generates the data of the printing of bottom layer 3 which is also the path for printing bottom layer 3 depending on the concave-convex points 2 on the work platform 1 in procedure B). That is, the bottom layer 3 is the lowest one or several layers of the model.

The basis to achieve the above process is that the applicant controls the data of the concave-convex degree of the surface of the work platform in advance. For example, input the coordinate data of the relative position on the work platform to the software of analysis model to generate the data of bottom layer 3 to confirm the path for printing bottom layer.

In the path of printing bottom layer 3, detouring the concave-convex points 2 on the work platform 1. The second print layer 4 is filled to cover the concave-convex points 2 to form a complete plane. Then, printing the subsequent print layer 5 densely. That is, in order to facilitate the description, the bottom layer 3 is set to 1 layer. But in practice, the bottom layer 3 is usually set to 3-6 layers according to the concave-convex degree of the concave-convex points 2.

Through the optimize way of scanning path above, in the generation of data of bottom layer 3, optimizing the path based on the shape parameter of the work platform 1 set in advance to detour the concave-convex points 2 on the work platform 1 in the process of printing bottom layer 3. The 3D printer is compatible with different shape and surface of the working platform 1 to make the model adheres well with the work platform 1 which avoids the phenomenon of warping at the bottom of the model due to the out-of-flatness of the work platform 1. In addition, the method can protect the nozzle and reduce wear while ensuring the quality of the printing model.

### Embodiment 1

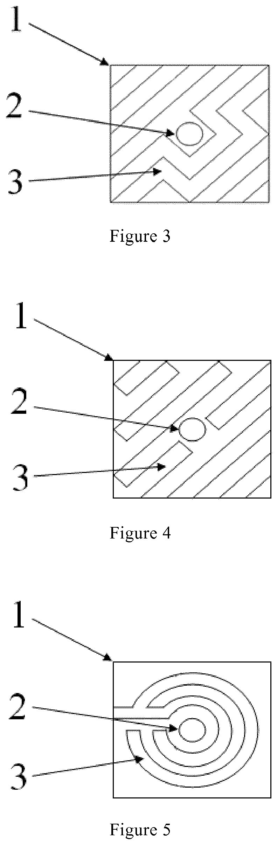

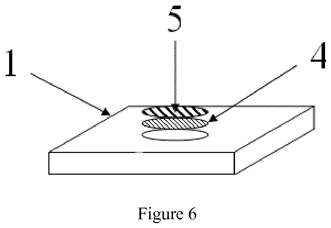

As shown in figure 3 the generation of the deviating path in the software model analysis and hierarchical processing. The nozzle moves left or right to deviate the concave-convex points when the nozzle is close to the concave-convex points 2 on the work platform 1 in the process of printing bottom layer 3, and then continues to print. Detour the concave-convex points 2 by the way of deviating. As shown in figure 6, use the conventional printing method to print the second print layer 4 to cover the concave-convex points 2 which were detoured in the printing of the bottom layer 3 to form a complete plane after finish the printing of the bottom layer 3, and then complete the printing of the subsequent print layer 5 on that plane.

### Embodiment 2

As shown in figure 4, the generation of the skipping path in the software model analysis and hierarchical processing. The nozzle moves up and over the concave-convex points when the nozzle is close to the concave-convex points 2 on the work platform 1 in the process of printing bottom layer 3, and then continues to print. Detour the concave-convex points 2 by the way of skipping. As shown in figure 6, use the same printing method of the embodiment 1 to continue the printing.

### Embodiment 3

As shown in figure 5, the generation of the circling path in the software model analysis and hierarchical processing. The nozzle prints around the concave-convex points 2 as a center when the nozzle is close to the concave-convex points 2 on the work platform 1 in the process of printing bottom layer 3, and then continues to print. Detour the concave-convex points 2 by the way of circling. As shown in figure 6, use the same printing method of the embodiment 1 to continue the printing.

The combination of the above embodiments gives a clearness of description of the present invention. But the invention is not limited to the implementation above. Commonly, various changes without departing from the subject of the invention are within the protection scope as defined by the claims and known to those skilled in the art thereof, e.g., detour the concave-convex points 2 by other ways.

## Claims

1. An optimized method of three-dimensional printing, the method comprising:
A) generating three-dimensional CAD model;
B) separating the three-dimensional CAD model into a series of layers;
C) printing the separate layers by the method that sprays the given composite material through a nozzle;
D) the bottom layer (3) is printed through the nozzle on the work platform;
E) the layers except the bottom layer are printed after finish the printing of the bottom layer (3) to form the three-dimensional composite model;
the method generates the data of the printing of bottom layer (3) depending on the concave-convex points (2) on the work platform (1) in procedure B), the method is characterized as having the path of printing the bottom layer (3) making a detour around or skipping the concave-convex points (2) present on the work platform (1) on the basis of the data of printing the bottom layer (3) so that the shape of the printing path varies according to the different work platform (1).

2. The optimized method of three-dimensional printing in claim 1 is characterized as having the nozzle moves to left or right to deviate the concave-convex points (2) when the nozzle is close to the concave-convex points (2) on the work platform (1), and then continues to print.

3. The optimized method of three-dimensional printing in claim 1 is characterized as having the nozzle moves up and over the concave-convex points (2) when the nozzle is close to the concave-convex points (2) on the work platform (1), and then continues to print.

4. The optimized method of three-dimensional printing in claim 1 is characterized as having the nozzle prints around the concave-convex points (2) as a center when the nozzle is close to the concave-convex points (2) on the work platform (1).

5. The optimized method of three-dimensional printing in one of claim 1 to 4 is **characterized by** printing the second print layer (4) to cover the concave-convex points (2) which were detoured in the printing of the bottom layer (3) to form a complete plane after finish the printing of the bottom layer (3), and then complete the printing of the subsequent print layer (5) on that plane.

6. The optimized method of three-dimensional printing in claim 2 wherein printing the second print layer to cover the concave-convex points which were detoured in the printing of the bottom layer to form a complete plane after finish the printing of the bottom layer, and then complete the printing of the subsequent print layer on that plane.

7. The optimized method of three-dimensional printing in claim 3 wherein printing the second print layer to cover the concave-convex points which were detoured in the printing of the bottom layer to form a complete plane after finish the printing of the bottom layer, and then complete the printing of the subsequent print layer on that plane.

8. The optimized method of three-dimensional printing in claim 4 wherein printing the second print layer to cover the concave-convex points which were detoured in the printing of the bottom layer to form a complete plane after finish the printing of the bottom layer, and then complete the printing of the subsequent print layer on that plane.

## Patentansprüche

1. Optimiertes dreidimensionales Druckverfahren, wobei das Verfahren umfasst:
A) Erzeugen eines dreidimensionalen CAD-Modells;
B) Trennen des dreidimensionalen CAD-Modells in eine Folge von Schichten;
C) Drucken der getrennten Schichten über das Verfahren, welches das gegebene Verbundmaterial durch eine Düse spritzt;
D) die Bodenschicht (3) wird durch die Düse auf die Arbeitsplattform gedruckt;
E) die Schichten mit Ausnahme der Bodenschicht werden nach Abschluss des Druckens der Bodenschicht (3) gedruckt, um das dreidimensionale Verbundmodell zu bilden;
das Verfahren erzeugt die Daten des Druckens der Bodenschicht (3) abhängig von den konkav-konvexen Punkten (2) auf der Arbeitsplattform (1) in Vorgang B), das Verfahren ist **dadurch gekennzeichnet, dass** es den Druckpfad der Bodenschicht (3) auf der Basis der Druckdaten der Bodenschicht (3) einen Umweg um die auf der Arbeitsplattform (1) vorhandenen konkav-konvexen Punkte (2) machen oder diese überspringen lässt, sodass die Form des Druckpfades je nach der verschiedenen Arbeitsplattform (1) variiert.

2. Optimiertes dreidimensionales Druckverfahren nach Anspruch 1, **dadurch gekennzeichnet, dass** es die Düse nach links oder rechts bewegen lässt, um die konkav-konvexen Punkte (2) zu umgehen, wenn sich die Düse nahe den konkav-konvexen Punkten (2) auf der Arbeitsplattform (1) befindet, und dann weiter druckt.

3. Optimiertes dreidimensionales Druckverfahren nach Anspruch 1, **dadurch gekennzeichnet, dass** es die Düse nach oben und über die konkav-konvexen Punkte (2) hinweg bewegen lässt, wenn sich die Düse nahe den konkav-konvexen Punkten (2) auf der Arbeitsplattform (1) befindet, und dann weiter druckt.

4. Optimiertes dreidimensionales Druckverfahren nach Anspruch 1, **dadurch gekennzeichnet, dass** es die Düse um die konkav-konvexen Punkte (2) als ein Zentrum herum drucken lässt, wenn sich die Düse nahe den konkav-konvexen Punkten (2) auf der Arbeitsplattform (1) befindet.

5. Optimiertes dreidimensionales Druckverfahren nach einem der Ansprüche 1 bis 4, **gekennzeichnet durch** Drucken der zweiten Druckschicht (4), um die konkav-konvexen Punkte (2), welche im Drucken der Bodenschicht (3) umgangen wurden, zu bedecken, um nach Abschluss des Druckens der Bodenschicht (3) eine vollständige Ebene zu bilden, und dann das Drucken der nachfolgenden Druckschicht (5) auf dieser Ebene zu vervollständigen.

6. Optimiertes dreidimensionales Druckverfahren nach Anspruch 2, **gekennzeichnet durch** Drucken der zweiten Druckschicht, um die konkav-konvexen Punkte, welche im Drucken der Bodenschicht umgangen wurden, zu bedecken, um nach Abschluss des Druckens der Bodenschicht eine vollständige Ebene zu bilden, und dann das Drucken der nachfolgenden Druckschicht auf dieser Ebene zu vervollständigen.

7. Optimiertes dreidimensionales Druckverfahren nach Anspruch 3, **gekennzeichnet durch** Drucken der zweiten Druckschicht, um die konkav-konvexen Punkte, welche im Drucken der Bodenschicht umgangen wurden, zu bedecken, um nach Abschluss des Druckens der Bodenschicht eine vollständige Ebene zu bilden, und dann das Drucken der nachfolgenden Druckschicht auf dieser Ebene zu vervollständigen.

8. Optimiertes dreidimensionales Druckverfahren nach Anspruch 4, **gekennzeichnet durch** Drucken der zweiten Druckschicht, um die konkav-konvexen Punkte, welche im Drucken der Bodenschicht umgangen wurden, zu bedecken, um nach Abschluss des Druckens der Bodenschicht eine vollständige Ebene zu bilden, und dann das Drucken der nachfolgenden Druckschicht auf dieser Ebene zu vervollständigen.

## Revendications

1. Procédé optimisé d'impression tridimensionnelle, le procédé comprenant le fait :
A) de générer un modèle CAO tridimensionnel ;
B) de séparer le modèle CAO tridimensionnel en une série de couches ;
C) d'imprimer les couches séparées par le procédé qui pulvérise le matériau composite donné par une buse ;
D) d'imprimer la couche inférieure (3) par la buse sur la plate-forme de travail ;
E) d'imprimer les couches à l'exception de la couche inférieure après la fin de l'impression de la couche inférieure (3) pour former le modèle composite tridimensionnel ;
le procédé génère les données de l'impression de la couche inférieure (3) en fonction des points concaves-convexes (2) sur la plate-forme de travail (1) dans la procédure B), le procédé est **caractérisé en ce que** le trajet d'impression de la couche inférieure (3) contourne ou saute les points concaves-convexes (2) présents sur la plate-forme de travail (1) sur la base des données d'impression de la couche inférieure (3) pour que la forme du trajet d'impression varie selon la plate-forme de travail différente (1).

2. Procédé optimisé d'impression tridimensionnelle de la revendication 1, **caractérisé en ce que** la buse se déplace vers la gauche ou la droite pour s'écarter des points concaves-convexes (2) lorsque la buse est proche des points concaves-convexes (2) sur la plate-forme de travail (1), puis poursuit l'impression.

3. Procédé optimisé d'impression tridimensionnelle selon la revendication 1, **caractérisé en ce que** la buse se déplace vers le haut et au-dessus des points concaves-convexes (2) lorsque la buse est proche des points concaves-convexes (2) sur la plate-forme de travail (1), puis poursuit l'impression.

4. Procédé optimisé d'impression tridimensionnelle de la revendication 1, **caractérisé en ce que** la buse effectue l'impression autour des points concaves-convexes (2) en tant que centre lorsque la buse est proche des points concaves-convexes (2) sur la plate-forme de travail (1).

5. Procédé optimisé d'impression tridimensionnelle selon l'une des revendications 1 à 4, **caractérisé par** l'impression de la deuxième couche d'impression (4) pour couvrir les points concaves-convexes (2) qui ont été contournés lors de l'impression de la couche inférieure (3) pour former un plan complet après la fin de l'impression de la couche inférieure (3), puis terminer l'impression de la couche d'impression suivante (5) sur ce plan.

6. Procédé optimisé d'impression tridimensionnelle selon la revendication 2, **caractérisé par** l'impression de la deuxième couche d'impression pour couvrir les points concaves-convexes qui ont été contournés lors de l'impression de la couche inférieure pour former un plan complet après la fin de l'impression de la couche inférieure, puis terminer l'impression de la couche d'impression suivante sur ce plan.

7. Procédé optimisé d'impression tridimensionnelle selon la revendication 3, **caractérisé par** l'impression de la deuxième couche d'impression pour couvrir les points concaves-convexes qui ont été contournés lors de l'impression de la couche inférieure pour former un plan complet après la fin de l'impression de la couche inférieure, puis terminer l'impression de la couche d'impression suivante sur ce plan.

8. Procédé optimisé d'impression tridimensionnelle selon la revendication 4, **caractérisé par** l'impression de la deuxième couche d'impression pour couvrir les points concaves-convexes qui ont été contournés lors de l'impression de la couche inférieure pour former un plan complet après la fin de l'impression de la couche inférieure, puis terminer l'impression de la couche d'impression suivante sur ce plan.
